(19) Europäisches Patentamt
European Patent Office
Office européen des brevets

(11) **EP 3 022 066 B1**

(12) **FASCICULE DE BREVET EUROPEEN**

(45) Date de publication et mention de la délivrance du brevet:
**30.08.2017 Bulletin 2017/35**

(21) Numéro de dépôt: **14736827.8**

(22) Date de dépôt: **08.07.2014**

(51) Int Cl.:
*B60C 1/00* *(2006.01)*    *C08L 23/22* *(2006.01)*
*C08L 23/28* *(2006.01)*    *C08L 91/00* *(2006.01)*

(86) Numéro de dépôt international:
**PCT/EP2014/064626**

(87) Numéro de publication internationale:
**WO 2015/007576 (22.01.2015 Gazette 2015/03)**

(54) **BANDE DE ROULEMENT DE PNEUMATIQUE**

REIFENLAUFFLÄCHE

TYRE TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.07.2013 FR 1356922**

(43) Date de publication de la demande:
**25.05.2016 Bulletin 2016/21**

(73) Titulaire: **Compagnie Générale des Etablissements Michelin**
**63000 Clermont-Ferrand (FR)**

(72) Inventeurs:
• **COSTE, Nathalie**
**F-63040 Clermont-Ferrand Cedex 9 (FR)**
• **LEMASSON, Guillaume**
**F-63040 Clermont-Ferrand Cedex 9 (FR)**
• **SCHACH, Régis**
**F-63040 Clermont-Ferrand Cedex 9 (FR)**

(74) Mandataire: **Gandon-Pain, Sylvie**
**Manufacture Française des Pneumatiques Michelin**
**23, place des Carmes - Déchaux**
**DGD/PI - F35 - Ladoux**
**63040 Clermont-Ferrand Cedex 9 (FR)**

(56) Documents cités:
**EP-A2- 2 502 742       WO-A1-2005/017013**
**WO-A2-02/32993        FR-A1- 2 939 142**
**US-A1- 2004 030 036**

**Description**

La présente invention est relative aux bandes de roulement de pneumatiques comportant des compositions de caoutchouc à base de caoutchouc de butyl.

Une des exigences requises pour un pneumatique est d'assurer une adhérence optimale sur route, notamment sur sol mouillé. Une façon de conférer au pneumatique une adhérence élevée sur sol mouillé est d'utiliser une composition de caoutchouc dans sa bande de roulement, laquelle composition présente un large potentiel hystérétique.

Mais en même temps la bande de roulement de pneumatique doit aussi minimiser sa contribution à la résistance au roulement du pneumatique, c'est à dire être la moins hystérétique possible. Ainsi la composition de caoutchouc de la bande de roulement doit-elle satisfaire à deux exigences antinomiques, à savoir présenter un potentiel d'hystérèse maximal pour satisfaire à l'exigence d'adhérence et présenter une hystérèse aussi faible que possible pour satisfaire à l'exigence de résistance au roulement.

Les manufacturiers de pneumatiques ont donc proposé des matériaux hystérétiques, comme par exemple des compositions à base de copolymères de butadiène et de styrène avec un taux pondéral de styrène d'au moins 35%, des compositions de caoutchouc comportant des taux élevés de charges renforçantes ou de plastifiants. Mais ces solutions se font généralement au détriment de la résistance au roulement.

Il a été aussi proposé d'introduire du caoutchouc butyl dans les compositions de caoutchouc des bandes de roulement des pneumatiques pour améliorer leur adhérence sur sol mouillé. En effet le butyl est un élastomère dont le potentiel de dissipation est connu et constitue en soi un bon candidat pour améliorer l'adhérence, notamment sur sol mouillé comme l'enseigne le brevet US 6,060,552. Mais ce brevet enseigne aussi que le butyl doit être utilisé à des taux d'au plus de 30 parties pour cent parties d'élastomère (pce) pour minimiser sa contribution hystérétique dans le domaine de la résistance au roulement.

Le brevet EP 1 687 370 B1 divulgue que l'utilisation, dans une bande de roulement de pneumatique, d'une composition de caoutchouc renforcée d'une silice et comprenant un certain taux de caoutchouc butyl et du trioléate de glycérol permet d'améliorer l'adhérence sur sol mouillé du pneumatique. Mais cette solution n'est pas satisfaisante vis-à-vis de la performance de la résistance au roulement.

Satisfaire à la fois à l'exigence d'adhérence, notamment sur sol mouillé, et de résistance au roulement reste une préoccupation constante des manufacturiers de pneumatiques.

Les Demanderesses ont découvert lors de leurs recherches que la présence combinée dans une composition de caoutchouc butyl comme élastomère majoritaire et d'une huile polybutène permettait d'améliorer le compromis entre les performances d'adhérence sur sol mouillé et de résistance au roulement des bandes de roulement de pneumatique à base de caoutchouc butyl.

Un premier objet de l'invention concerne une bande de roulement de pneumatique qui comprend une composition de caoutchouc à base d'une matrice élastomère qui comprend plus de 50% en poids d'au moins un caoutchouc butyl, d'une charge renforçante et d'un système plastifiant qui comprend au moins une huile polybutène de température de transition vitreuse inférieure à -75°C.

L'invention a également pour objet un pneumatique comportant une bande de roulement conforme à l'invention.

L'invention a aussi pour objet un procédé pour préparer une bande de roulement de pneumatique conforme à l'invention.

L'invention a également pour objet une composition de caoutchouc utilisable dans une bande de roulement, laquelle composition est à base d'une matrice élastomère qui comprend plus de 50% en poids d'au moins un caoutchouc butyl, d'une charge renforçante et d'un système plastifiant qui comprend au moins une huile polybutène de température de transition vitreuse inférieure à -75°C.

L'invention a aussi pour objet un procédé pour préparer une composition de caoutchouc utilisable dans une bande de roulement et définie comme ci-dessus avec la particularité que la charge renforçante est constituée majoritairement en poids d'une charge inorganique renforçante, laquelle composition comprend en outre un agent de couplage.

**DESCRIPTION DETAILLEE DE L'INVENTION :**

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Tous les pourcentages sont des pourcentages massiques sauf indication contraire.

Une caractéristique essentielle de la matrice élastomère de la composition de caoutchouc de la bande de roulement conforme à l'invention est de comprendre au moins un caoutchouc butyl, c'est-à-dire un ou plusieurs caoutchoucs butyl.

Les caoutchoucs butyl sont bien connus de l'homme de l'art notamment pour leur propriété d'imperméabilité à l'air. Il s'agit de copolymères d'isobutylène et de diène en $C_4$ à $C_6$, notamment d'isoprène. Généralement ces copolymères contiennent 1 à 5% en mole d'unité diénique, notamment isoprénique et présentent une viscosité Mooney (ML 1+8 à 125°C) de 30 à 60.

L'au moins un caoutchouc butyl peut être un caoutchouc butyl halogéné.

On appelle caoutchouc butyl halogéné les copolymères halogénés d'isobutylène et de diène en $C_4$ à $C_6$, notamment d'isoprène. Ils sont obtenus par halogénation, notamment par chloration ou bromation des copolymères d'isobutylène et de diène en $C_4$-$C_6$, notamment d'isoprène. Les copolymères halogénés d'isobutylène et de diène en $C_4$-$C_6$, notamment d'isoprène, présentent généralement un taux d'halogène de 1 à 4% en poids du poids de copolymère. Le caoutchouc butyl halogéné est préférentiellement un caoutchouc butyl bromé.

Par extension de la définition de caoutchouc butyl, l'au moins un caoutchouc butyl peut être aussi un terpolymère d'isobutylène, de paraméthylstyrène et de paraméthylstyrène halogéné, préférentiellement bromé, commercialisé sous l'appellation EXXPRO par EXXON ou le Polysar XL 10000 de Bayer.

L'au moins un caoutchouc butyl est utilisé à un taux supérieur à 50% en poids du poids de la matrice élastomère de la composition de caoutchouc. A un taux inférieur au taux précité l'adhérence de la bande de roulement est insuffisante. Plus le taux de l'au moins un caoutchouc butyl est important dans la matrice élastomère de la composition de caoutchouc, meilleur est le potentiel d'adhérence de la bande de roulement comportant la composition de caoutchouc. Ce taux est supérieur préférentiellement à 70%, plus préférentiellement à 80%, encore plus préférentiellement à 90% en poids du poids de la matrice élastomère de la composition de caoutchouc. Avantageusement ce taux est de 100% en poids du poids de la matrice élastomère de la composition de caoutchouc, c'est-à-dire la matrice élastomère consiste en l'au moins un caoutchouc butyl.

Lorsque le taux pondéral de l'au moins un caoutchouc butyl est inférieur à 100% du poids de la matrice élastomère, on utilise un autre élastomère diénique essentiellement insaturé ou un mélange d'élastomères diéniques essentiellement insaturés pour compléter à 100%. La matrice élastomère est alors constituée de l'au moins un caoutchouc butyl et d'élastomère diénique essentiellement insaturé.

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles). Conviennent comme élastomère diénique essentiellement insaturé les polybutadiènes, les polyisoprènes y compris le caoutchouc naturel, les copolymères de butadiène, les copolymères d'isoprène et les mélanges de ces élastomères. Conviennent aussi les copolymères de monomères diènes conjugués et de vinylaromatiques, notamment de styrène.

Le choix de l'élastomère diénique sera conditionné à la fois par sa température de transition vitreuse, Tg, et son taux pondéral dans la matrice élastomère, ainsi que par le compromis souhaité entre l'adhérence sur sol mouillé et la résistance au roulement du pneumatique. Si l'on souhaite améliorer davantage la performance de résistance au roulement, on préfère utiliser un élastomère diénique de Tg relativement basse, notamment inférieure à -25°C. Si l'on souhaite améliorer davantage l'adhérence sur sol mouillé, on préfère utiliser un élastomère de Tg d'au moins -25°C. L'amélioration de la performance d'adhérence sur sol mouillé et de la performance de résistance au roulement augmente avec le taux de l'au moins un caoutchouc butyl dans la matrice élastomère.

La composition de caoutchouc de la bande de roulement conforme à l'invention comporte tout type de charge dite renforçante, connue pour ses capacités à renforcer une composition de caoutchouc utilisable pour la fabrication de pneumatiques, par exemple une charge organique renforçante telle que du noir de carbone, une charge inorganique renforçante telle que de la silice, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les bandes de roulement de pneumatique. Parmi ces derniers, on citera plus particulièrement les noirs de carbone renforçants des séries 100, 200, 300 (grades ASTM), comme par exemple les noirs N115, N134, N234, N326, N330, N339, N347, N375. Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 m$^2$/g.

A titre de charge inorganique renforçante, on citera également les charges minérales du type alumineuse, en particulier de l'alumine ($Al_2O_3$) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

De manière préférentielle, le taux de charge renforçante totale est compris entre 40 et 150 pce. En deçà de 40 pce, le renforcement de la composition de caoutchouc est insuffisant pour apporter un niveau de cohésion ou de résistance à l'usure adéquats de la composition de caoutchouc. De manière encore plus préférentielle, le taux de charge renforçante totale est d'au moins 50 pce. Au-delà de 150 pce, il existe un risque d'augmentation de l'hystérèse et donc de la résistance au roulement des pneumatiques. Pour cette raison, le taux de charge renforçante totale est de préférence dans un domaine allant de 50 à 120 pce.

Selon un mode de réalisation de l'invention, la charge renforçante comprend une charge organique renforçante, préférentiellement un noir de carbone.

Selon un autre mode de réalisation de l'invention, la charge renforçante comprend une charge inorganique renforçante, préférentiellement une silice.

Selon un mode de réalisation préférentiel de l'invention, la charge renforçante est constituée majoritairement en poids d'une charge inorganique renforçante, ce qui signifie que la charge inorganique renforçante constitue plus de 50% en poids de la charge renforçante de la composition de caoutchouc de la bande de roulement conforme à l'invention. Cette charge inorganique renforçante est préférentiellement une silice.

Selon un mode de réalisation particulier où la charge inorganique renforçante telle que la silice représente plus de 50% en poids de la charge renforçante, le noir de carbone est utilisé de préférence à un taux inférieur à 20 pce, plus préférentiellement inférieur à 10 pce (par exemple entre 0.5 et 20 pce, notamment entre 2 et 10 pce), encore plus préférentiellement inférieur à 5 pce. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la charge inorganique renforçante à au moins un des élastomères qui constituent la matrice élastomère de la composition de caoutchouc, notamment dans le cas où la charge inorganique constitue plus de 50% en poids de la charge renforçante de la composition de caoutchouc, on utilise généralement et de manière bien connue un agent de couplage (ou agent de liaison). Par agent de couplage, on entend plus précisément un agent apte à établir une liaison suffisante de nature chimique et/ou physique entre la charge considérée et l'élastomère, tout en facilitant la dispersion de cette charge au sein de la matrice élastomère.

Cet agent au moins bifonctionnel est destiné à assurer une connexion suffisante, de nature chimique et/ou physique, entre la charge inorganique (surface de ses particules) et l'élastomère. On utilise en particulier des organosilanes, notamment des alkoxysilanes polysulfurés ou des mercaptosilanes, ou encore des polyorganosiloxanes porteurs de fonctions capables de se lier physiquement et/ou chimiquement à la charge inorganique et de fonctions capables de se lier physiquement et/ou chimiquement à l'élastomère, par exemple par l'intermédiaire d'un atome de soufre. Des agents de liaison silice/élastomère, notamment, ont été décrits dans un grand nombre de documents, les plus connus étant des alkoxysilanes bifonctionnels tels que des alkoxysilanes polysulfurés. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Selon le mode de réalisation particulier de l'invention où on utilise un caoutchouc butyl halogéné, l'agent de couplage est préférentiellement un aminoalkylalcoxysilane . On entend par aminoalkylalcoxysilane un alkylalcoxysilane dans lequel le radical alkyle porte un groupement aminé. Le radical alkyle est préférentiellement en $C_1$-$C_6$, plus préférentiellement éthyle ou propyle. Le radical alcoxy est préférentiellement en $C_1$-$C_6$, plus préférentiellement $C_1$-$C_3$, encore plus préférentiellement méthoxy ou éthoxy. Le groupement aminé est préférentiellement $NH_2$. Par ailleurs l'aminoalkylalcoxysilane est avantageusement un aminoalkyltrialcoxysilane. A titre d'aminoalkytrialcoxysilane conviennent tout particulièrement le 3-aminopropyltriméthoxysilane et le 3-aminopropyltriéthoxysilane.

Selon ce mode de réalisation particulier de l'invention, l'aminoalkylalcoxysilane peut être aussi utilisé en mélange avec un autre agent de couplage de structure chimique différente. Préférentiellement ce mélange contient un aminoalkylalcoxysilane et un alkoxysilane polysulfuré, en particulier un mélange de 3-aminopropyltriéthoxysilane et de tétrasulfure de bis(3-triéthoxysilylpropyle) (TESPT).

La teneur en agent de couplage, qu'il s'agisse d'un seul composé ou d'un mélange de composés, est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Alternativement, l'agent de couplage peut être apporté par la silice dont la surface a été au préalable modifiée par un organosilane, comme le tétrasulfure de bis(3-triéthoxysilylpropyl) ou mercaptosilanes. De telles silices sont commercialisées par Evonik et PPG sous les appellations respectives « Coupsil » et « Ciptane ».

La composition de caoutchouc de la bande de roulement conforme à l'invention peut également contenir des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité de la composition de caoutchouc, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

L'au moins une huile polybutène présente une température de transition vitreuse inférieure à -75°C, préférentiellement inférieure à -85°C, plus préférentiellement inférieure à -95°C.

Selon un mode de réalisation de l'invention, l'au moins une huile polybutène est un homopolymère ou un copolymère de raffinat de coupe $C_4$. Une coupe C4 contient typiquement 44 à 49% d'isobutylène, 24 à 28% de 1-butène, 19 à 21% de 2-butène, 6 à 8% de n-butane et 2 à 5% d'isobutane, comme décrit par exemple en page 73 de « Chimie Organique Industrielle », Ed. De Boeck University, traduction de la 3ème édition anglaise.

Selon un autre mode de réalisation de l'invention, l'au moins une huile polybutène est un copolymère d'au moins d'isobutylène, de 1-butène et de 2-butène. L'au moins une huile polybutène peut être un homopolymère d'isobutylène, un copolymère d'isobutylène et de 1-butène ou d'isobutylène et de 2-butène, ou un terpolymère d'isobutylène, de 1-butène et de 2-butène. L'au moins une huile polybutène est typiquement constituée de 40 à 100% d'unité dérivée d'isobutylène, de 0 à 40% d'unité dérivée de 1-butène et de 0 à 40% d'unité dérivée de 2-butène. Préférentiellement le taux d'unité dérivée d'isobutylène est de 40 à 99% en poids du poids d'huile polybutène, celui d'unité dérivée de 1-butène de 2 à 40% en poids du poids d'huile polybutène et celui d'unité dérivée de 2-butène de 0 à 30% en poids du poids d'huile polybutène. Plus préférentiellement le taux d'unité dérivée d'isobutylène est 40 à 96% en poids du poids d'huile polybutène, celui d'unité dérivée de 1-butène de 2 à 40% en poids du poids d'huile polybutène et celui d'unité dérivée de 2-butène de 2 à 20% en poids du poids d'huile polybutène. Encore plus préférentiellement l'au moins une huile polybutène est un homopolymère ou un copolymère constitué de 65 à 100% d'unité dérivée d'isobutylène et 0 à 35% d'unité dérivée de 1-butène.

Typiquement la masse molaire moyenne en nombre de l'au moins une huile polybutène est inférieure à 10000 g/mol, préférentiellement inférieure à 5000 g/mol, plus préférentiellement inférieure à 2000 g/mol. Elle est typiquement comprise entre 400 g/mol et 10000 g/mol, préférentiellement entre 400 g/mol et 5000 g/mol, plus préférentiellement entre 400 g/mol et 2000 g/mol.

Dans le cas où le système plastifiant contient plusieurs huiles polybutène, chacune des huiles polybutène présente l'une quelconque des caractéristiques mentionnées ci-dessus qui définissent la structure chimique, la masse molaire moyenne en nombre et la température de transition vitreuse d'une huile polybutène selon l'invention.

A titre d'exemple d'huile polybutène peuvent être cités les produits commercialisés sous les appellations « Dynapak Poly », « Parapol » par les sociétés respectives UNIVAR, EXXON Mobil , ou encore les polyisobutylènes commercialisés par le groupe TPC.

L'au moins une huile polybutène est utilisée dans la composition de caoutchouc généralement à un taux allant de 10 à 80 pce, préférentiellement de 15 à 60 pce, plus préférentiellement de 20 à 40 pce.

On ajuste le taux d'huile polybutène selon sa Tg et selon le taux de butyl ou de butyl halogéné dans la matrice élastomère. Par exemple plus la Tg de l'huile polybutène est élevée, plus son taux sera important dans la composition de caoutchouc.

Selon un mode de réalisation particulièrement préférentiel, l'au moins une huile polybutène a une masse molaire moyenne en nombre allant de 400 g/mol à 2000 g/mol et est utilisé à un taux allant préférentiellement de 15 à 60 pce, encore plus préférentiellement de 20 à 40 pce.

Dans le cas où l'huile polybutène consiste en un mélange d'huiles polybutène, le taux d'huile polybutène s'applique au mélange d'huiles polybutène.

Selon un mode de réalisation particulièrement préférentiel, l'au moins une huile polybutène constitue le seul plastifiant de la composition de caoutchouc, c'est-à-dire que le système plastifiant consiste en l'au moins une huile polybutène. Dans le cas où le système plastifiant consiste en un mélange d'huiles polybutène selon l'invention, la composition ne contient pas d'autres plastifiants que ce mélange d'huiles polybutène.

Selon un autre mode de réalisation de l'invention, le système plastifiant de la composition de caoutchouc peut contenir un autre plastifiant en plus de l'au moins une huile polybutène. Cet autre plastifiant peut présenter lui-même une température de transition vitreuse inférieure à -75°C. Alternativement cet autre plastifiant peut présenter une température de transition vitreuse supérieure ou égale à -75°C, comme par exemple les huiles conventionnellement utilisées dans les compositions de caoutchouc, telles que les huiles paraffiniques, aromatiques et naphténiques. Cet autre plastifiant est utilisé à un taux compris préférentiellement entre à 0 et 30 pce, plus préférentiellement entre 0 et 15 pce.

Selon un mode de réalisation tout particulièrement préférentiel qui permet d'optimiser encore davantage le compromis entre la performance de résistance de roulement et celle d'adhérence sur sol mouillé, le taux massique du système plastifiant P exprimé par rapport à la masse de l'au moins un caoutchouc butyl et la température de transition vitreuse $Tg_P$ du système plastifiant exprimée en degré Kelvin satisfont à la relation suivante :

$$P \times (208 - Tg_P) \div Tg_P \geq 0.025$$

Le taux massique du système plastifiant P exprimé par rapport à la masse de l'au moins un caoutchouc butyl est défini par le rapport de la masse du système plastifiant sur la somme de la masse du système plastifiant et de la masse de l'au moins un caoutchouc butyl.

La composition de caoutchouc de la bande de roulement conforme à l'invention peut aussi comporter également tout ou partie des additifs usuels habituellement utilisés dans les compositions de caoutchouc destinées à la fabrication de pneumatiques, comme par exemple des pigments, des agents de protection tels que cires anti-ozone, anti-ozonants chimiques, antioxydants, des agents anti-fatigue, un système de réticulation à base soit de soufre, soit de donneurs de soufre et/ou de peroxyde et/ou de bismaléimides, des accélérateurs de vulcanisation, des activateurs de vulcanisation et les mélanges de tels composés.

La composition de caoutchouc de la bande de roulement conforme à l'invention peut être fabriquée dans des mélangeurs appropriés, en utilisant généralement deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc de la bande de roulement conforme à l'invention peut être préparée selon un procédé qui comprend les étapes suivantes :

- malaxer thermomécaniquement la matrice élastomère qui comprend plus de 50% en poids de l'au moins un caoutchouc butyl, la charge renforçante et le système plastifiant, le cas échéant l'agent de couplage et les autres additifs de la composition de caoutchouc à l'exception du système de réticulation, jusqu'à atteindre une température maximale comprise entre 110°C et 190°C ;
- refroidir l'ensemble à une température inférieure à 100°C ;
- incorporer ensuite un système de réticulation ;
- malaxer le tout jusqu'à une température maximale inférieure à 110°C pour obtenir une composition de caoutchouc.

La bande de roulement conforme à l'invention peut être fabriquée selon le procédé décrit ci-dessus qui comporte une étape supplémentaire de calandrage ou d'extrusion de la composition de caoutchouc.

L'invention concerne la bande de roulement précédemment décrite tant à l'état cru (c'est à dire, avant cuisson) qu'à l'état cuit (c'est à dire, après réticulation ou vulcanisation). L'invention concerne aussi le pneumatique comportant une bande de roulement conforme à l'invention, lequel pneumatique est tant à l'état cru qu'à l'état cuit.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

L'invention concerne également une composition de caoutchouc qui présente l'une quelconque des caractéristiques de la composition de caoutchouc de la bande de roulement conforme à l'invention. Cette composition de caoutchouc, objet particulier de l'invention, a aussi pour caractéristique essentielle de comprendre une charge inorganique, préférentiellement une silice, qui constitue plus de 50% en poids de la charge renforçante de la composition de caoutchouc. Elle a également pour caractéristique essentielle de comprendre un agent de couplage tel que défini précédemment pour lier la charge inorganique, notamment la silice, à l'élastomère de la composition de caoutchouc.

La composition de caoutchouc, objet particulier de l'invention, peut être préparée selon un procédé qui comprend les étapes suivantes :

- malaxer thermomécaniquement la matrice élastomère qui comprend plus de 50% en poids de l'au moins un caoutchouc butyl, la charge renforçante, l'agent de couplage et le système plastifiant, jusqu'à atteindre une température maximale comprise entre 110°C et 190°C ;
- refroidir l'ensemble à une température inférieure à 100°C ;
- incorporer ensuite un système de réticulation ;
- malaxer le tout jusqu'à une température maximale inférieure à 110°C pour obtenir une composition de caoutchouc.

Les caractéristiques précitées de la présente invention, ainsi que d'autres, seront mieux comprises à la lecture de la description suivante de plusieurs exemples de réalisation de l'invention, donnés à titre illustratif et non limitatif.

## MESURES ET TESTS UTILISES

La masse molaire moyenne en nombre est déterminée par analyse SEC ("*Size Exclusion Chromatography"*). Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, par exemple tétrahydrofuranne à une concentration de 1 g/litre. Puis la solution est filtrée sur un filtre, par exemple de porosité 0,45 $\mu$m, avant injection dans l'appareillage. L'appareillage utilisé est par exemple une chaîne chromatographique "Waters alliance". Le solvant d'élution est par exemple le tétrahydrofuranne, le débit est de 0,7 ml/min, la température du système est de 35°C. On utilise par exemple un jeu de 4 colonnes "Waters" en série (dénominations "Styragel HMW7", " Styragel HMW6E", et deux " Styragel HT6E"). Le volume injecté de la solution de l'échantillon de polymère est par exemple de 100 $\mu$l. Le détecteur est un réfractomètre différentiel (par exemple "Waters 2410") pouvant être équipé d'un logiciel associé d'exploitation des données (par exemple "Waters Millenium"). Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

La température de transition vitreuse est mesurée au moyen d'un calorimètre différentiel ("Differential Scanning Calorimeter") selon la norme ASTM D3418 (1999). Dans le cas d'un mélange de plastifiants, la mesure est effectuée sur le mélange de plastifiants dans les proportions relatives de celles de la composition de caoutchouc de la bande de roulement conforme à l'invention.

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm$^2$ de section), soumis à une sollicitation sinusoïdale en cisaillement simple alterné, à la fréquence de 10 Hz, dans les conditions normales de température (23°C) selon la norme ASTM D 1349-09. On effectue un balayage en amplitude de déformation crête-crête de 0,1 à 50% (cycle aller), puis de 50% à 0,1% (cycle retour). Le résultat exploité est le facteur de perte tan$\delta$. Pour le cycle retour, on indique la valeur maximale de tan$\delta$ observée (tan$\delta_{max}$). Le facteur de perte à 23°C est exprimé en base 100. Le témoin ayant un indice 100, une valeur supérieure à 100 indique que la composition de l'exemple considéré est moins hystérétique à 23°C traduisant une moindre résistance au roulement de la bande de roulement comportant une telle composition.

Sur le même appareillage, on enregistre la réponse d'un échantillon de composition vulcanisée (éprouvette cylindrique de 2 mm d'épaisseur et de 79 mm$^2$ de section), à une contrainte donnée, à la fréquence de 10 Hz, dans des conditions de températures variables. Le résultat exploité est le facteur de perte tan ($\delta$) à -20°C. Le facteur de perte est exprimé en base 100 par rapport au facteur de perte de la composition témoin. Une valeur supérieure à 100 témoigne d'une hystérèse plus élevée de la composition considérée, à -20°C traduisant une meilleure adhérence sur sol mouillé de la bande de roulement comportant une telle composition.

Exemple 1 :

Préparation des compositions de caoutchouc C0, C1, C2 et C3 :

Les formulations (en pce) des compositions C0, C1, C2 et C3 sont décrites dans le tableau I.

Les compositions C1 à C3 contiennent toute 100 pce d'un caoutchouc butyl bromé et 25 pce de plastifiant. Elles diffèrent par la nature du plastifiant. Le plastifiant de C1 est l'huile de polybutène TPC150 de Tg -103°C. Le plastifiant de C2 est un mélange de deux huiles polybutène de Tg -103°C et -84°C respectivement. Le plastifiant de C3 est une huile polybutène de Tg -84°C. Les compositions C1, C2 et C3 sont conformes à l'invention puisque le plastifiant ou le mélange de plastifiant présente une Tg inférieure à -75°C et est présent dans une teneur comprise entre 10 et 50 pce dans la composition de caoutchouc.

La composition C0 qui n'est pas conforme à l'invention ne contient pas de plastifiant. Elle contient 100 pce d'un caoutchouc butyl bromé, 74 pce de silice et 5 pce de noir de carbone comme charge renforçante, ce qui correspond à une fraction volumique de charge renforçante de 25% du volume de la composition de caoutchouc. Cette fraction volumique de charge renforçante est identique à celle de C1, C2 et C3.

Pour chacune des compositions, le taux de silane et le taux de diphénylguanidine ont été ajustés en fonction du taux de silice présent dans la composition de caoutchouc.

En résumé, les compositions C1 à C3 diffèrent de C0 en ce qu'elles contiennent un plastifiant conforme à l'invention.

Tableau I

| | C0 non conforme | C1 conforme | C2 conforme | C3 conforme |
|---|---|---|---|---|
| BIIR (1) | 100 | 100 | 100 | 100 |
| Silice (2) | 74 | 90 | 90 | 90 |
| Silane (3) | 4.8 | 6.0 | 6.0 | 6.0 |
| Noir de carbone N234 | 5 | 5 | 5 | 5 |
| Plastifiant (4) | 0 | 25 | 0 | 0 |
| Plastifiant (5) | 0 | 0 | 25 | 0 |
| Plastifiant (6) | 0 | 0 | 0 | 25 |
| ZnO | 2.5 | 2.5 | 2.5 | 2.5 |
| Acide stéarique | 2.0 | 2.0 | 2.0 | 2.0 |
| Antioxydant (7) | 1.9 | 1.9 | 1.9 | 1.9 |
| Cire ozone | 1.5 | 1.5 | 1.5 | 1.5 |
| DPG (8) | 1.5 | 1.7 | 1.7 | 1.7 |
| Sulfénamide | 1.8 | 1.8 | 1.8 | 1.8 |
| Soufre | 1.4 | 1.4 | 1.4 | 1.4 |
| Fraction volumique charge | 25% | 25% | 25% | 25% |
| **Propriétés à cuit** | | | | |
| tan$\delta$ max 23°C | 100 | 110 | 105 | 100 |

(suite)

| | C0 non conforme | C1 conforme | C2 conforme | C3 conforme |
|---|---|---|---|---|
| tan$\delta$ max -20°C | 100 | 118 | 115 | 126 |

(1) Butyl bromé BIIR 3220 de Lanxess
(2) Silice « Zeosil 1165 MP » de la société Rhodia (type HDS)
(3) Aminopropyltriéthoxysilane
(4) Huile polybutène TPC150 de la société TPC, de Tg -103°C, Mn 560, Ip 2.08
(5) Mélange de 12.5 pce d'huile polybutène TPC150 et de 12.5 pce d'huile pce d'huile polybutène Dynapak 190 de la société Dynapak, de Tg -84°C, Mn 1190, Ip 1.62
(6) Huile polybutène Dynapak 190 de Tg -84°C, Mn 1190, Ip 1.62
(7) N-(1,3-diméthylbutyl)-N'-phényl-p-phénylènediamine, de la société Flexsys
(8) diphénylguanidine (« Perkacit » DPG de la société Flexsys)

On procède pour la fabrication de ces compositions de la manière suivante : on introduit dans un mélangeur interne (taux de remplissage final : environ 70% en volume), dont la température initiale de cuve est d'environ 60°C, successivement l'élastomère, la silice, l'agent de couplage, le cas échéant le plastifiant, ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les propriétés des compositions C0 à C3 après cuisson figurent dans le tableau I.

On constate que les compositions C1 à C3 sont plus hystérétiques à -20°C que la composition témoin C0, sans dégrader l'hystérèse à 23°C. Ces résultats traduisent que l'introduction d'huile polybutène conformément à l'invention dans une composition de caoutchouc butyl permet un gain significatif adhérence sur sol mouillé d'un pneumatique comportant une bande de roulement à base de caoutchouc butyl sans pénaliser sa performance en résistance au roulement. Le compromis entre la performance d'adhérence sur sol mouillée et celle de basse résistance au roulement d'une bande de roulement à base de caoutchouc butyl est amélioré.

Les compositions C1 et C2 sont conformes au mode de réalisation particulier et préférentiel selon lequel le taux de plastifiant et sa température de transition vitreuse satisfont à la relation $P \times (208 - Tg_P) \div Zg_P \geq 0,025$. Les compositions C1 et C2 sont à la fois beaucoup moins hystérétiques à 23°C et plus hystérétiques à -20°C que la composition témoin C0 et présentent donc un meilleur compromis que la composition C3 également conforme à l'invention, mais qui n'est pas conforme à ce mode de réalisation particulier et préférentiel et qui est caractérisé par une hystérèse à 23°C proche de celle du témoin. Ces résultats montrent une amélioration encore plus significative du compromis de performance de basse résistance au roulement et d'adhérence sur sol mouillé d'un pneumatique comportant une bande de roulement à base de caoutchouc butyl conformément à ce mode de réalisation particulier.

Exemple 2 :

Une composition de caoutchouc C4 dont la formulation (en pce) est consignée dans le tableau II a été préparée de la même manière que les compositions C1 à C3. La composition C4 contient 100 pce d'un caoutchouc butyl bromé et 25 pce d'huile polybutène de Tg -84°C. Conforme à l'invention, elle est utilisée comme bande de roulement d'un pneumatique tourisme à carcasse radiale, noté P-C4 de dimension 205/55R16 conventionnellement fabriqué.

Hormis la composition de caoutchouc constitutive de la bande de roulement, le pneumatique P-C4 est en tous points identiques à un pneumatique de référence en matière d'adhérence sur sol mouillé, « Primacy HP ».

La performance du pneumatique P-C4 est comparée à celle du pneumatique de référence « Primacy HP ». Les résultats figurent dans le tableau II.

Pour les essais pneumatiques, tous les pneumatiques sont montés à l'avant et à l'arrière d'un véhicule automobile, sous pression de gonflage nominale.

Les pneumatiques montés sur un véhicule automobile de marque Renault et de modèle « Mégane », équipé d'un système ABS, sont soumis aux tests de freinage sur sol mouillé à 25°C consistant à mesurer la distance nécessaire pour passer de 80 km/h à 10 km/h lors d'un freinage brutal sur sol arrosé (béton bitumineux). Une valeur supérieure à celle du témoin, arbitrairement fixée à 100, indique un résultat amélioré, c'est-à-dire une distance de freinage plus courte.

La résistance au roulement est mesurée sur un volant, selon la méthode ISO 87-67 (1992). Une valeur supérieure à celle du témoin, arbitrairement fixée à 100, indique un résultat amélioré c'est-à-dire une résistance au roulement plus basse.

Tableau II

| | C4 |
|---|---|
| BIIR (1) | 100 |
| Silice (2) | 90 |
| Silane (3) | 6.6 |
| Noir de carbone N234 | 5 |
| Plastifiant (4) | 25 |
| ZnO | 2.5 |
| Acide stéarique | 2.0 |
| Antioxydant (5) | 1.9 |
| Cire ozone | 1.5 |
| DPG (6) | 1.7 |
| Sulfénamide | 1.5 |
| Soufre | 2 |
| Fraction volumique de charge | 25% |
| **Propriétés du pneumatique** | P-C4 |
| Résistance au roulement | 95 |
| Adhérence mouillée | 141 |
| (1) Butyl bromé BIIR 3220 de Lanxess<br>(2) Silice « Zeosil 1165 MP » de la société Rhodia (type HDS)<br>(3) Mélange de 3 pce d'aminopropyltriéthoxysilane et de 3.6 pce de TESPT<br>(4) Huile polybutène Dynapak 190<br>(5) N-(1,3-diméthylbutyl)-N'-phényl-p-phénylènediamine, de la société Flexsys<br>(6) diphénylguanidine (« Perkacit » DPG de la société Flexsys) | |

On constate que le pneumatique P-C4 présente une performance d'adhérence sur sol mouillé fortement améliorée par rapport celle du pneumatique de référence et ceci avec une moindre déchéance de la résistance au roulement. Ces essais pneumatiques corroborent les résultats de l'exemple 1 qui mettaient en évidence le potentiel des compositions de caoutchouc en tant que matériau pour bande de roulement qui présentent un compromis amélioré entre les performances d'adhérence sur sol mouillé et de résistance au roulement.

**Revendications**

1.   Bande de roulement de pneumatique qui comprend une composition de caoutchouc à base :

- d'une matrice élastomère qui comprend plus de 50% en poids d'au moins un caoutchouc butyl,
- d'une charge renforçante,
- et d'un système plastifiant qui comprend au moins une huile polybutène de température de transition vitreuse inférieure à -75°C.

2.   Bande de roulement selon la revendication 1, dans laquelle l'au moins une huile polybutène présente une température de transition vitreuse inférieure à -85°C, préférentiellement inférieure à -95°C.

3.   Bande de roulement selon la revendication 1 ou 2, dans laquelle l'au moins un caoutchouc butyl représente plus de 70%, préférentiellement plus de 80%, plus préférentiellement plus de 90% en poids de la matrice élastomère.

**4.** Bande de roulement selon la revendication 3, dans laquelle l'au moins un caoutchouc butyl, représente 100% en poids de la matrice élastomère.

**5.** Bande de roulement selon l'une quelconque des revendications 1 à 4, dans laquelle la masse molaire moyenne en nombre de l'au moins une huile polybutène est comprise entre 400 g/mol et 10000 g/mol, préférentiellement entre 400 g/mol et 5000 g/mol, plus préférentiellement entre 400 g/mol et 2000 g/mol.

**6.** Bande de roulement selon l'une quelconque des revendications 1 à 5, dans laquelle le taux de l'au moins une huile polybutène varie dans un domaine allant de 10 à 80 pce, préférentiellement de 15 à 60 pce, plus préférentiellement de 20 à 40 pce.

**7.** Bande de roulement selon l'une quelconque des revendications 1 à 6, dans laquelle l'au moins une huile polybutène est un homopolymère ou un copolymère de raffinat de coupe $C_4$.

**8.** Bande de roulement selon l'une quelconque des revendications 1 à 7 dans laquelle le système plastifiant consiste en l'au moins une huile polybutène.

**9.** Bande de roulement selon l'une quelconque des revendications 1 à 8, dans laquelle le taux massique du système plastifiant $P$ exprimé par rapport à la masse de l'au moins un caoutchouc butyl et la température de transition vitreuse $Tg_P$ du système plastifiant exprimée en degré Kelvin satisfont à la relation suivante :

$$P \times (208 - Tg_P) \div Tg_P \geq 0.025$$

**10.** Bande de roulement selon l'une quelconque des revendications 1 à 9, **caractérisée en ce que** la charge renforçante comprend une charge inorganique renforçante, préférentiellement une silice.

**11.** Bande de roulement selon la revendication 10, **caractérisée en ce que** la composition comprend en outre un agent de couplage.

**12.** Bande de roulement selon la revendication 11 dans laquelle la charge inorganique renforçante représente plus de 50% en poids de la charge renforçante.

**13.** Procédé pour préparer une bande de roulement de pneumatique selon l'une quelconque des revendications 1 à 12, lequel procédé comprend les étapes suivantes :

- malaxer thermomécaniquement la matrice élastomère qui comprend plus de 50% en poids de l'au moins un caoutchouc butyl, la charge renforçante et le système plastifiant jusqu'à atteindre une température maximale comprise entre 110°C et 190°C ;
- refroidir l'ensemble à une température inférieure à 100°C ;
- incorporer ensuite un système de réticulation ;
- malaxer le tout jusqu'à une température maximale inférieure à 110°C pour obtenir une composition de caoutchouc ;
- extruder ou calandrer la composition de caoutchouc ainsi obtenue.

**14.** Pneumatique comportant une bande de roulement selon l'une quelconque des revendications 1 à 12.

**15.** Composition de caoutchouc comme définie dans la revendication 12.

**16.** Procédé pour fabriquer la composition de caoutchouc selon la revendication 15, lequel procédé comprend les étapes suivantes :

- malaxer thermomécaniquement la matrice élastomère qui comprend plus de 50% en poids de l'au moins un caoutchouc butyl, la charge renforçante, l'agent de couplage et le système plastifiant, jusqu'à atteindre une température maximale comprise entre 110°C et 190°C ;
- refroidir l'ensemble à une température inférieure à 100°C ;
- incorporer ensuite un système de réticulation ;

- malaxer le tout jusqu'à une température maximale inférieure à 110°C pour obtenir une composition de caoutchouc.

**Patentansprüche**

1. Reifenlauffläche, die eine Kautschukzusammensetzung auf Basis:

    - einer Elastomermatrix, die mehr als 50 Gew.-% mindestens eines Butylkautschuks umfasst,
    - eines verstärkenden Füllstoffs
    - und eines Weichmachersystems, das mindestens ein Polybutenöl mit einer Glasübergangstemperatur von weniger als -75 °C umfasst,

    umfasst.

2. Lauffläche nach Anspruch 1, wobei das mindestens eine Polybutenöl eine Glasübergangstemperatur von weniger als -85 °C, vorzugsweise weniger als -95 °C, aufweist.

3. Lauffläche nach Anspruch 1 oder 2, wobei der mindestens eine Butylkautschuk mehr als 70 Gew.-%, vorzugsweise mehr als 80 Gew.-% und weiter bevorzugt mehr als 90 Gew.-% der Elastomermatrix ausmacht.

4. Lauffläche nach Anspruch 3, wobei der mindestens eine Butylkautschuk 100 Gew.-% der Elastomermatrix ausmacht.

5. Lauffläche nach einem der Ansprüche 1 bis 4, wobei die zahlenmittlere Molmasse des mindestens einen Polybutenöls zwischen 400 g/mol und 10.000 g/mol, vorzugsweise zwischen 400 g/mol und 5000 g/mol und weiter bevorzugt zwischen 400 g/mol und 2000 g/mol liegt.

6. Lauffläche nach einem der Ansprüche 1 bis 5, wobei der Gehalt an dem mindestens einen Polybutenöl in einem Bereich von 10 bis 80 phe, vorzugsweise 15 bis 60 phe und weiter bevorzugt 20 bis 40 phe variiert.

7. Lauffläche nach einem der Ansprüche 1 bis 6, wobei es sich bei dem mindestens einen Polybutenöl um ein Homopolymer oder ein Copolymer von $C_4$-Schnitt-Raffinat handelt.

8. Lauffläche nach einem der Ansprüche 1 bis 7, wobei das Weichmachersystem aus dem mindestens einen Polybutenöl besteht.

9. Lauffläche nach einem der Ansprüche 1 bis 8, wobei der Massenanteil des Weichmachersystems P, ausgedrückt in Bezug auf die Masse des mindestens einen Butylkautschuks und die Glasübergangstemperatur $Tg_p$ des Weichmachersystems in Grad Kelvin die folgende Gleichung erfüllt:

$$P \times (208 - Tg_p) \div Tg_p \geq 0{,}025.$$

10. Lauffläche nach einem der Ansprüche 1 bis 9, **dadurch gekennzeichnet, dass** der verstärkende Füllstoff einen verstärkenden anorganischen Füllstoff, vorzugsweise eine Kieselsäure, umfasst.

11. Lauffläche nach Anspruch 10, **dadurch gekennzeichnet, dass** die Zusammensetzung außerdem ein Kupplungsmittel umfasst.

12. Lauffläche nach Anspruch 11, wobei der verstärkende anorganische Füllstoff mehr als 50 Gew.-% des verstärkenden Füllstoffs ausmacht.

13. Verfahren zur Herstellung einer Reifenlauffläche nach einem der Ansprüche 1 bis 12, bei dem man:

    - die Elastomermatrix, die mehr als 50 Gew.-% des mindestens einen Butylkautschuks, den verstärkenden Füllstoff und das Weichmachersystem umfasst, thermomechanisch knetet, bis eine Höchsttemperatur zwischen 110 und 190°C erreicht ist;

- das Ganze auf eine Temperatur von weniger als 100°C abkühlt;
- dann ein Vernetzungssystem einarbeitet;
- das Ganze bis zu einer Höchsttemperatur von weniger als 110°C knetet, was eine Kautschukzusammensetzung ergibt;
- die so erhaltene Kautschukzusammensetzung extrudiert oder kalandriert.

14. Reifen, umfassend eine Lauffläche nach einem der Ansprüche 1 bis 12.

15. Kautschukzusammensetzung gemäß Anspruch 12.

16. Verfahren zur Herstellung der Kautschukzusammensetzung nach Anspruch 15, bei dem man:

- die Elastomermatrix, die mehr als 50 Gew.-% des mindestens einen Butylkautschuks, den verstärkenden Füllstoff, das Kupplungsmittel und das Weichmachersystem umfasst, thermomechanisch knetet, bis eine Höchsttemperatur zwischen 110 und 190°C erreicht ist;
- das Ganze auf eine Temperatur von weniger als 100°C abkühlt;
- dann ein Vernetzungssystem einarbeitet;
- das Ganze bis zu einer Höchsttemperatur von weniger als 110°C knetet, was eine Kautschukzusammensetzung ergibt.

**Claims**

1. Tyre tread that comprises a rubber composition based:

   - on an elastomer matrix that comprises more than 50% by weight of at least one butyl rubber,
   - on a reinforcing filler,
   - and on a plasticizing system that comprises at least one polybutene oil having a glass transition temperature below -75°C.

2. Tread according to Claim 1, in which the at least one polybutene oil has a glass transition temperature below -85°C, preferably below -95°C.

3. Tread according to Claim 1 or 2, in which the at least one butyl rubber represents more than 70%, preferably more than 80% and more preferably more than 90% by weight of the elastomer matrix.

4. Tread according to Claim 3, in which the at least one butyl rubber represents 100% by weight of the elastomer matrix.

5. Tread according to any one of Claims 1 to 4, in which the number-average molar mass of the at least one polybutene oil is between 400 g/mol and 10 000 g/mol, preferably between 400 g/mol and 5000 g/mol, more preferably between 400 g/mol and 2000 g/mol.

6. Tread according to any one of Claims 1 to 5, in which the content of the at least one polybutene oil varies within a range extending from 10 to 80 phr, preferably from 15 to 60 phr, more preferably from 20 to 40 phr.

7. Tread according to any one of Claims 1 to 6, in which the at least one polybutene oil is a homopolymer or copolymer of $C_4$ fraction raffinate.

8. Tread according to any one of Claims 1 to 7, in which the plasticizing system consists of the at least one polybutene oil.

9. Tread according to any one of Claims 1 to 8, in which the mass content of the plasticizing system P expressed relative to the mass of the at least one butyl rubber and the glass transition temperature $Tg_P$ of the plasticizing system expressed in kelvin satisfy the following equation:

$$P \times (208 - Tg_P) \div Tg_P \geq 0.025$$

**10.** Tread according to any one of Claims 1 to 9, **characterized in that** the reinforcing filler comprises a reinforcing inorganic filler, preferably a silica.

**11.** Tread according to Claim 10, **characterized in that** the composition additionally comprises a coupling agent.

**12.** Tread according to Claim 11, in which the reinforcing inorganic filler represents more than 50% by weight of the reinforcing filler.

**13.** Process for preparing a tyre tread according to any one of Claims 1 to 12, which process comprises the following steps:

- thermomechanically kneading the elastomer matrix that comprises more than 50% by weight of the at least one butyl rubber, the reinforcing filler and the plasticizing system until a maximum temperature of between 110°C and 190°C is reached;
- cooling the combined mixture to a temperature below 100°C;
- subsequently incorporating a crosslinking system;
- kneading everything up to a maximum temperature below 110°C in order to obtain a rubber composition;
- extruding or calendering the rubber composition thus obtained.

**14.** Tyre comprising a tread according to any one of Claims 1 to 12.

**15.** Rubber composition as defined in Claim 12.

**16.** Process for manufacturing the rubber composition according to Claim 15, which process comprises the following steps:

- thermomechanically kneading the elastomer matrix that comprises more than 50% by weight of the at least one butyl rubber, the reinforcing filler, the coupling agent and the plasticizing system until a maximum temperature of between 110°C and 190°C is reached;
- cooling the combined mixture to a temperature below 100°C;
- subsequently incorporating a crosslinking system;
- kneading everything up to a maximum temperature below 110°C in order to obtain a rubber composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6060552 A
- EP 1687370 B1
- US 6610261 B
- US 6747087 B
- WO 9637547 A
- WO 9928380 A
- WO 03002648 A
- US 2005016651 A
- WO 03002649 A
- US 2005016650 A
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2010072685 A
- WO 2008055986 A

**Littérature non-brevet citée dans la description**

- Chimie Organique Industrielle. De Boeck University, 73